# EUROPEAN PATENT SPECIFICATION

(11) **EP 1 164 672 B1**
(45) Date of publication and mention of the grant of the patent: **29.12.2010**
(21) Application number: 01202145.7
(22) Date of filing: 05.06.2001
(51) Int. Cl.: H02B 1/32

(54) **Cabinet for electrical switchboard**
Schrank für ein elektrisches Schaltfeld
Armoire pour tableau de commutation

(30) Priority: 16.06.2000 IT MI001363
(43) Date of publication of application: 19.12.2001
(73) Proprietor: ABB S.p.A., 20124 Milano (IT)
(72) Inventor: Fontana, Rodolfo, 21050 Clivio (IT); Cagliani, Cristian, 23847 Molteno (IT)
(74) Representative: Giavarini, Francesco

(56) References cited:
- DE-U- 29 723 536
- US-A- 5 292 189
- US-A- 5 333 950

## Description

The present invention relates to a cabinet for an electrical switchboard, particularly for an electrical switchboard for automation.

It is known that cabinets for electrical switchboards use a supporting frame which bounds a volume in which the electrical and/or electronic devices of switchboard are arranged and constitutes a framework which is suitable to provide structural support for the various components of the switchboard that are operatively connected thereto, such as for example the devices themselves, supporting guides, cladding and/or protective switchboards, doors for opening/closing said switchboards, et cetera.

In their typical embodiment, the frames have a structure which is shaped like a parallelepiped and is constituted by profiled elements which are arranged substantially horizontally, commonly known as cross-members or rails, and by profiled elements which are arranged vertically, known as uprights; these profiled elements are furthermore mutually connected by virtue of appropriate connecting means, such as multiway corner joints.

In particular, in automation switchboards the electrical and/or electronic devices of the switchboard are arranged, during bench assembly, on one or more mounting plates which are generally constituted by metallic elements shaped like parallelepipeds; the resulting plates are then arranged by using appropriate devices, for example hoists, in a vertical position within the volume bound by the frame and are operatively fixed to said frame.

Depending on the constructive configuration and with reference to a front view of the cabinet, the plates can be inserted from the front or from the back of the frame or laterally, especially in the case of multiple cabinets arranged side by side.

In the current state of the art, the manners in which the mounting plates are first positioned inside the cabinet and then fixed to the frame have drawbacks and disadvantages.

In particular, in view of the considerable weight of the assembly constituted by the plate and the devices, the operations required to insert the plate, arrange it in the intended position inside the cabinet and then fix it to the frame are complicated and require a considerable commitment of workforce and working time. For example, one solution which is known in the art uses connection means which comprise a first pair of contoured elements which are coupled to the lower ends of the plate; a flat metallic fixing member, configured so as to mate geometrically with the walls of a corresponding cross-member of the frame, is then connected to each contoured element; finally, while the plate is supported by a hoist, the flat members are fixed to the cross-members by virtue of screws and the upper ends of said plate are fixed by virtue of additional flat metal members to two other cross-members of the frame. Moreover, a significant limitation in the art is the fact that the means currently used to mutually connect the plate and the frame have a constructive structure which makes them scarcely flexible in applications. Although on the one hand they are suitable for example for front or rear insertion of the plate in the cabinet, on the other hand they make lateral insertion of the plate extremely difficult if not impossible. This entails a considerable technical problem both in the case of a single cabinet and most of all in the case of multiple cabinets arranged side by side, when the plates, in order to be inserted from the front or rear, must be narrower than the distance between the two uprights of the front or back of the cabinet in which they are to be used. Taking into account the height of the cabinet, the surface that can be used for positioning the devices is reduced significantly for each plate, consequently increasing the number of cabinets required for a same set of devices to be positioned or reducing the set of devices that can be installed in a same number of cabinets. Alternatively, it is necessary to use connection means configured in a different manner, with a consequent increase in production costs, in physical inventory and in inventory codes to be managed.

Specific solutions are also known for lateral insertion of the plates, especially when multiple cabinets are arranged side by side; in this case one uses a series of mutually aligned supporting guides, each of which is fixed to a corresponding frame. Said guides act as track on which the plates are made to slide until they reach the intended position; for this purpose, the guides have devices which facilitate the relative sliding of the plate. In this case, the work required to ensure optimum operation is very time-consuming and complicated, since the acceptable tolerances are on the order of hundredths of a millimeter.

Patents US-5333950 and US-5292189 disclose cabinet frames according to the preamble of the following claim 1.

The aim of the present invention is to obviate the drawbacks of the prior art and in particular to provide a cabinet for an electrical switchboard in which the insertion of the plate for fixing the electric and/or electrical devices of the switchboard and its subsequent fixing to the frame in the intended position occur more simply and rapidly than in the known art, consequently saving labor time and costs.

Within the scope of this aim, a particular object of the present invention is to provide a cabinet for an electrical switchboard in which it is possible to insert a fixing plate from the front or back of the frame as well as from the side without having to radically or at least significantly modify the connection devices used, with a consequent benefit in terms of flexibility in applications.

Another object of the present invention is to provide a cabinet for an electrical switchboard which allows optimum utilization of the useful surface of the fixing plate of the electrical and/or electronic devices of the switchboard, particularly in the case of multiple cabinets arranged side by side.

Another object of the present invention is to provide a cabinet for an electrical switchboard which allows to optimize the number of components to be used, with a consequent benefit in terms of production costs, physical inventory and inventory codes to be managed.

Another object of the present invention is to provide a cabinet for an electrical switchboard which is highly reliable, relatively easy to manufacture and at competitive costs.

This aim, these objects and others which will become apparent hereinafter are achieved by a cabinet for an electrical switchboard according to the following claim 1.

In this way, the plate for fixing the electrical and/or electronic devices of the cabinet is inserted and operatively connected to the frame in the intended position significantly more simply and quickly than in the known art, with a solution which is flexible from the point of view of application and effective from the functional point of view.

Further characteristics and advantages of the invention will become apparent from the description of preferred but not exclusive embodiments of the cabinet according to the invention, illustrated only by way of non-limitative example in the accompanying drawings,
wherein:
Figure 1 is a perspective view of a contoured body used in the cabinet according to the invention;
Figure 2 is a perspective view of the contoured body during coupling to a plate for mounting in the cabinet according to the invention;
Figure 3 is a schematic perspective view of the assembly formed by the contoured body and the mounting plate during insertion on a supporting guide in one embodiment of the cabinet according to the invention;
Figure 4 is a schematic perspective view of the assembly formed by the contoured body and the mounting plate during insertion on a supporting guide in another embodiment of the cabinet according to the invention.

The cabinet for electrical switchboard according to the invention comprises a supporting frame which is essentially formed by uprights and cross-members or rails which are appropriately connected to each other so as to provide a configuration which is substantially shaped like a parallelepiped; the constructive configuration of the frame as a whole, of the uprights and cross-members that constitute it, and of the various elements of the switchboard, such as the cladding switchboards or the doors et cetera, and the manners in which they are connected to the frame are widely known in the art and therefore are not shown in the figures.

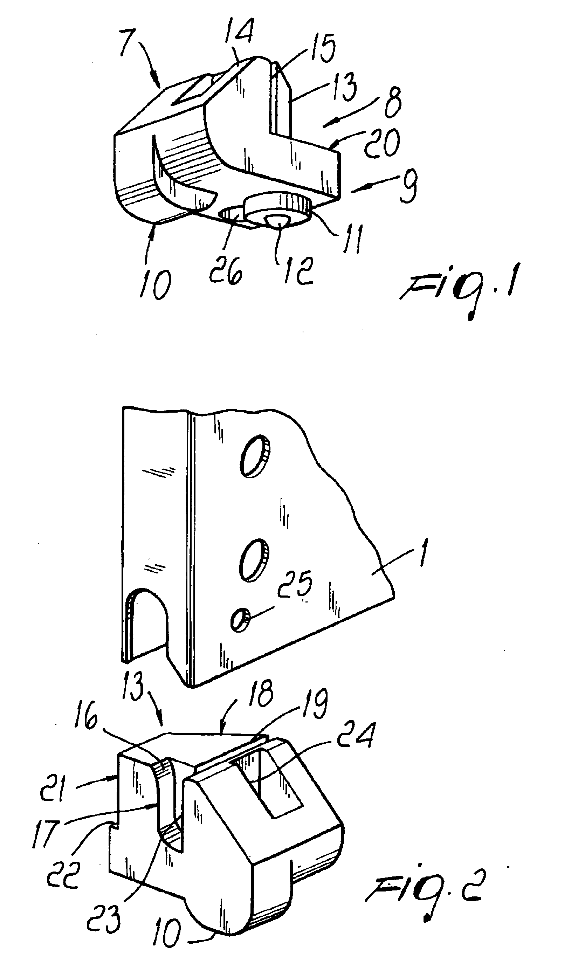

The cabinet according to the invention uses at least one mounting plate 1 which is generally formed by a metallic element which is substantially shaped like a parallelepiped and is partially shown in Figures 2 to 4, and a suitable device for connecting it to the frame of the cabinet itself; during assembly, the electrical and/or electronic devices of the switchboard are arranged on the plate 1 in manners and configurations which are widely known in the art and therefore are not described further. Said devices can comprise, for example, switches, buttons, PLCs (Programmable Logic Controllers), instruments for controlling and/or monitoring machines, et cetera.

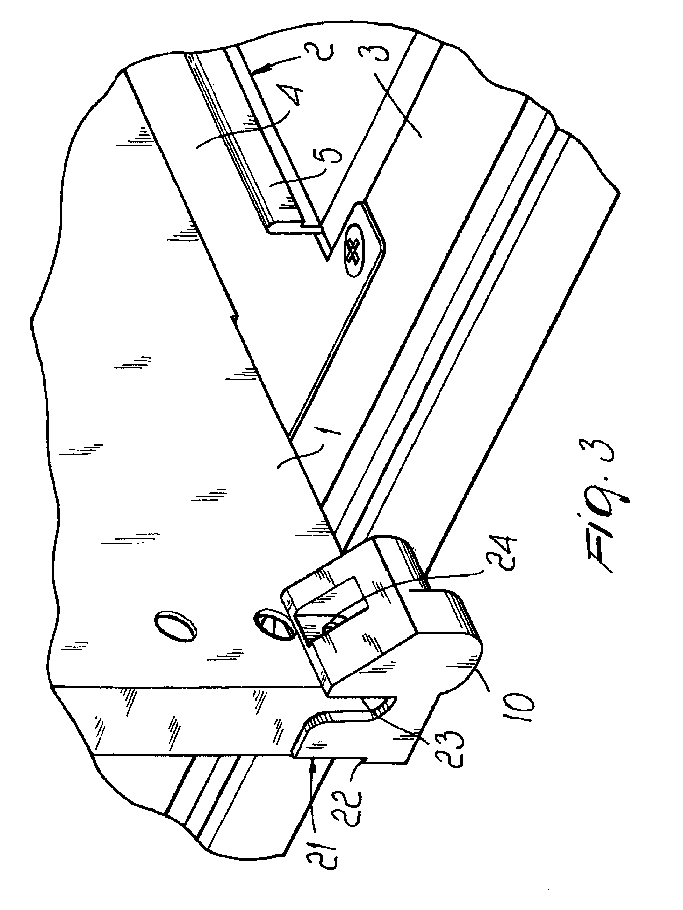

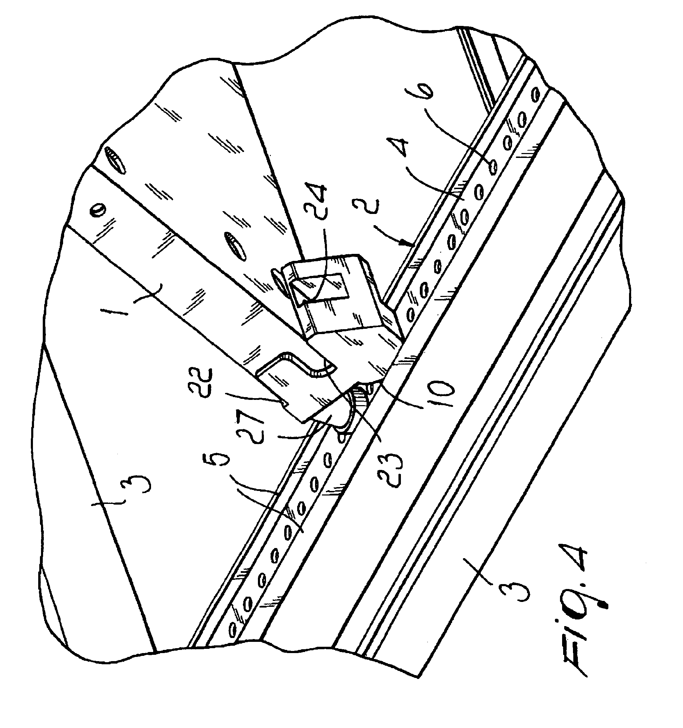

At the base of the frame there is at least one supporting guide 2 which is suitable to support the plate 1 and has a flat base wall 4, from the sides of which two mutually parallel side walls 5 protrude; furthermore, as shown in Figure 4, one or more holes 6, suitable to facilitate the operative coupling between the plate 1 and the guide 2 in a chosen working position, can be formed along the base wall 4. The guide 2 is fixed, at its opposite ends, to the frame by virtue of conventional fixing means; in particular, according to the requirements of the application and with reference to a front view of the switchboard, the guide 2 can be connected to a pair of cross-members, schematically designated by the reference numeral 3 in Figures 3 and 4, along the line that connects the front and the back or along the line that connects the two sides of said frame.

Advantageously, the cabinet according to the invention uses a contoured body 7 provided with a head surface 8 suitable to couple to one end of the plate 1 and with a base surface 9 from which means for operative coupling to the guide 2 protrude in the opposite direction with respect to the head 8.

In particular, the means for operative coupling to the guide 2 comprise a contoured protrusion 10 which protrudes from the base 9 and has an end surface provided with a convex profile in which the convexity is orientated in the opposite direction with respect to the head 8, so as to interact operatively with the base wall 4 of the guide 2.

Furthermore, the coupling means comprise a receptacle or container 11 provided with a substantially cylindrical body which is at least partially coupled by interference in a seat formed in the base 9 of the contoured body 7; a substantially spherical body 12 protrudes partially from the receptacle 11, can move with respect to said receptacle and is suitable to interact operatively with the wall 4 of the guide 2. Alternatively, instead of the spherical body 12 it is possible to use a cylindrical body, for example a roller which can move with respect to the remaining part of the contoured body 7. Finally, on the base of the contoured body 7, on the opposite side with respect to the head 8, it is possible to provide an additional cavity 26 which is suitable to accommodate means for connection to the guide 2, as will become apparent in detail in the description that follows.

In turn, the head 8 of the contoured body 7 has a first block 13 and a second block 14 which protrude from the base 9 in a substantially vertical direction and are structurally separated from each other by a slot 15. In particular, the block 13 has: a first wall 19, which delimits the slot 15 and has a recessed corner 16 which has a substantially curved lateral profile 17 which is suitable to facilitate geometric coupling to the corresponding contoured end of the plate 1; and a second wall 18, which lies opposite the wall in which the curved profile 17 is formed and which, seen from above, lies diagonally with respect to the wall 19. In this manner, on the base surface 9 there is a free resting plane 20 for the walls of the plate 1. Moreover, the block 13 has a third wall 21 which is arranged opposite and substantially parallel to the wall 19 and protrudes from the base surface 9 so as to form on the base 9 an end edge 22 for supporting a wall of the plate 1.

The second block 14 has, on the wall 23 that delimits the slot 15, a through hole 24 which is suitable to be aligned with a corresponding hole 25 formed in a wall of the plate 1 and to accommodate fixing means, for example a screw, between the contoured body 7 and said plate 1.

In practice, during the assembly of the switchboard, the plate 1 is bench-assembled with the necessary electrical and/or electronic devices; then two corresponding contoured bodies 7 are coupled to the lower ends of the plate 1 so that the block 13 couples geometrically with the perimetric walls of said plate. In particular, a first wall of the plate enters the slot 15, a second wall which lies opposite the first one rests on the edge 22 and partially on the plane 20, and a third side wall, which connects the first wall and the second wall, rests against the upper surface of the block 13 and on the curved side of the corner 16. The contoured body and the plate can be mutually fixed by simply inserting a screw in the aligned holes 24 and 25. The plate 1 is then lifted and positioned inside the frame, initially resting the contoured bodies 7 on the previously fixed guides 2 of the frame. In this manner, the weight of the assembly constituted by the plate and the devices is discharged, by virtue of the contoured bodies 7, onto the guides 2 and from there onto the sturdier structure of the cabinet. The plate 1 is then pushed along the guides 2 so that the protrusion 10 and the ball 12, by interacting with the wall 4, facilitate the sliding of the plate and the reaching of the intended working position; finally, the plate is arranged vertically.

In particular, if the plate is inserted from the front or rear of the frame, it is possible to use two supporting guides 2 which are arranged in a parallel configuration along the line that connects the front cross-member and the back cross-member of the frame; in this case, each one of the contoured bodies 7 slides on a corresponding guide so that the side walls of the protrusion 10 are guided by the side walls 5 of said guide. Advantageously, as shown in Figure 4, a self-tapping pin 27 is used at the working position in which the plate is to be arranged; said pin has a base which is coupled to a hole of the guide 6 and a head which enters the cavity 26 of the body 7. In this manner, when the intended position is reached, the protrusion 10 practically acts as a hinge about which the plate is rotated until the pin enters the cavity. Finally, the upper ends of the plate can be fixed to the frame in manners which are known extensively in the art.

In the case of lateral insertion, instead, a single guide 2 which joins two cross-members arranged on the sides of the frame is used; as shown schematically in Figure 3, the plate is made to slide along the guide with the protrusion 10 and most of all so that the ball 12 rotates with respect to the receptacle 11, facilitating the sliding action and the reaching of the intended position. This solution is particularly advantageous in the case of multiple cabinets arranged side by side. In this case, the guides 2, each associated with a corresponding frame, are in fact mutually aligned so as to form a single sliding track: the plates are therefore inserted by making them slide along the guides and moving them into their final position. In this manner, the plates can be arranged side by side and form a continuous wall in which it is possible to use, and utilize substantially completely, plates which are wider than in the case of front insertion, since the distance between the uprights is no longer a constraint.

Finally, the upper ends of the plates are fixed to the corresponding frames and optionally to each other by using conventional and simple fixing means.

In practice it has been found that the cabinet for electrical switchboard according to the invention fully achieves the intended aim and objects, with significant advantages with respect to the known art.

The steps for the insertion and positioning of the plate, by virtue of the use of the contoured body 7 and of the supporting guide 2, are in fact greatly simplified with respect to the known art, since the plate is not held up by the hoist but rests on the guide and can be handled more easily by an operator; in particular, the steps for positioning inside the frame are rendered extremely simple and quick by the presence, on the body 7, of the coupling means which allow the sliding of the plate on the guides, both for front insertion and for lateral insertion. In the latter case, the presence of the coupling means on the contoured body 7, and particularly of the spherical body 12, is particularly advantageous not only for facilitating insertion operations but most of all in the case of multiple cabinets arranged side by side, since it allows to avoid the machining work on the guides that is instead necessary in the known art.

Another significant advantage is the fact that the means to be used are substantially the same both for front insertion and for lateral insertion, with a solution which is flexible in its applications and allows to optimize production costs, inventory codes and physical inventory to be managed.

Another advantage is provided by the shape of the contoured body 7, which by virtue of its constructive structure combines simple manufacturing with functional effectiveness. Said body in fact allows to couple the plate to the base of the frame without having to perform additional screwing operations, since it is sufficient to insert the head of the pin 27 in the cavity 26. This is particularly advantageous not only during assembly but also and most of all if one wishes to disassemble the plate.

The cabinet thus conceived is susceptible of numerous modifications and variations, all of which are within the scope of the inventive concept; all the details may furthermore be replaced with other technically equivalent elements. In practice, the materials and the dimensions may be any according to the requirements and the state of the art.

## Claims

1. A cabinet for an electrical switchboard, comprising:
- a supporting frame which is substantially shaped like a parallelepiped;
- at least one plate (1) for mounting electrical and/or electronic devices of the switchboard, said plate (1) being arranged substantially vertically within the volume bound by the frame;
- a device comprising at least one guide (2) for supporting the mounting plate (1) and a contoured body (7) provided with a head (8) which is suitable to couple to one end of the plate (1) and with a base (9) from which means for operative coupling to the guide (2) protrude in the opposite direction with respect to said head (8), said coupling means being suitable to facilitate the sliding of the plate (1) along the guide (2) and its arrangement in a chosen working position;
**characterized in that** said at least one guide (2) is fixed to the supporting frame and **in that** said coupling means comprise an element which is operatively associated with the contoured body (7) and can move with respect to it.

2. The cabinet for electrical switchboard according to claim 1, **characterized in that** said means for operative coupling to the guide (2) comprise a contoured protrusion (10) which protrudes from the base (9) and has an end surface having a convex profile which is suitable to interact with the guide (2), its convexity being directed in the opposite direction with respect to the head (8).

3. The cabinet for electrical switchboard according to claim 1, **characterized in that** said movable element comprises a substantially spherical body (12) which protrudes partially from a receptacle (11) which is operatively associated with the base (9) of the contoured body (7), said spherical body (12) being movable with respect to the receptacle (11) and being suitable to interact operatively with the guide (2).

4. The cabinet for electrical switchboard according to claim 3, **characterized in that** said receptacle (11) has a substantially cylindrical body which is inserted at least partially with interference in a seat formed in the base (9) of the contoured body (7).

5. The cabinet for electrical switchboard according to claim 1, **characterized in that** said movable element comprises a substantially cylindrical roller which is operatively associated with the base (9) and can move with respect to it.

6. The cabinet for electrical switchboard according to one or more of the preceding claims, **characterized in that** the head (8) of the contoured body has a first block (13) and a second block (14) which protrude from the base (9) in a substantially vertical direction and are mutually separated by a slot (15), said first block (13) being suitable to couple geometrically to a lower end of the plate (1) so that a first wall thereof enters said slot (15) and a second wall, which lies opposite the first one, rests on the base (22), on the opposite side with respect to the second block (14).

7. The cabinet for electrical switchboard according to claim 6, **characterized in that** said first block (13) comprises:
- a first wall (19) which delimits the slot (15) and has a recessed corner (16) which, seen laterally, has a substantially curved profile (17) which is suitable to facilitate geometric coupling to a third wall of the plate (1);
- a second wall (21) which lies opposite the first wall (19) and rises substantially vertically from the base (9) so as to form thereon an edge (22) for the resting of said wall of the plate (1); and
- a third wall (18) which joins said first (19) and second (21) walls and lies diagonally with respect to them, so as to form on the base (9) an additional supporting edge (20) for the plate (1).

8. The cabinet for electrical switchboard according to claim 6, **characterized in that** said second block (14) has, at a wall (23) which delimits the slot (15), a through hole (24) which is suitable to accommodate means for fixing to the first wall of the plate (1).

9. The cabinet for electrical switchboard according to one or more of the preceding claims, **characterized in that** said supporting guide (2) has a base wall (4), which interacts with the coupling means, and a pair of side walls (5) which rise from the base wall (4), are substantially parallel to each other and guide said contoured body (7).

10. The cabinet for electrical switchboard according to one or more of the preceding claims, **characterized in that** on the base (9) of the contoured body (7) and on the opposite side with respect to the head (8) there is a cavity (26) which is suitable to accommodate means for connection to the guide (2), said connection means comprising a self-tapping pin (27) provided with a base which is fixed to the base wall (4) of the guide and with a head which is inserted in said cavity (26) of the contoured body (7).

## Patentansprüche

1. Schrank für eine elektrische Schalttafel, aufweisend:
- ein Trägergehäuse, das im Wesentlichen die Form eines Parallelotops auf;
- zumindest eine Platte (1) zum Montieren von elektrischen und/oder elektronischen Bauelementen der Schalttafel, wobei die Platte (1) im Wesentlichen vertikal innerhalb des durch das Gehäuse begrenzten Volumens angeordnet ist;
- eine Vorrichtung, die zumindest eine Führung (2) zum Halten der Montageplatte (1) und einen profilierten Körper (7) aufweist, der mit einem Kopfteil (8) versehen ist, das geeignet ist, mit einem Ende der Platte (1) und mit einer Basis (9) verbunden zu werden, aus der Mittel für eine Wirkverbindung mit der Führung (2) in einer dem Kopfteil (8) gegenüberliegenden Richtung vorstehen, wobei das Verbindungsmittel geeignet ist, die Gleitbewegung der Platte (1) entlang der Führung (2) und deren Anordnung in einer ausgewählten Arbeitsposition zu erleichtern;
**dadurch gekennzeichnet, dass** die zumindest eine Führung (2) an dem Trägergehäuse befestigt ist und dass das Verbindungsmittel ein Element aufweist, das in Wirkverbindung mit dem profilierten Körper (7) angeordnet ist und sich relative dazu bewegen kann.

2. Schrank für eine elektrische Schalttafel nach Anspruch 1, **dadurch gekennzeichnet, dass** die Mittel für eine Wirkverbindung mit der Führung (2) einen profilierten Vorsprung (10) aufweisen, der von der Basis (9) vorsteht und eine Endoberfläche mit einem konvexen Profil aufweist, die geeignet ist, mit der Führung (2) zu interagieren, wobei deren konvexe Form in die dem Kopfteil (8) gegenüberliegende Richtung gerichtet ist.

3. Schrank für eine elektrische Schalttafel nach Anspruch 1, **dadurch gekennzeichnet, dass** das bewegliche Element einen im Wesentlichen kugelförmigen Körper (12) aufweist, der teilweise aus einem Behältnis (11) vorsteht, das in Wirkverbindung mit der Basis (9) des profilierten Körpers (7) angeordnet ist, wobei der kugelförmige Körper (12) in Bezug auf das Behältnis (11) beweglich ist und geeignet, ist, mit der Führung (2) wirksam zu interagieren.

4. Schrank für eine elektrische Schalttafel nach Anspruch 3, **dadurch gekennzeichnet, dass** das Behältnis (11) einen im Wesentlichen zylindrischen Körper aufweist, der zumindest teilweise in einen in der Basis (9) des profilierten Körpers (7) ausgebildeten Sitz eingreifend eingefügt ist.

5. Schrank für eine elektrische Schalttafel nach Anspruch 1, **dadurch gekennzeichnet, dass** das bewegliche Element eine im Wesentlichen zylindrische Rolle aufweist, die in Wirkverbindung mit der Basis (9) angeordnet ist und sich relativ dazu bewegen kann.

6. Schrank für eine elektrische Schalttafel nach einem oder mehreren der vorhergehenden Ansprüche, **dadurch gekennzeichnet, dass** das Kopfteil (8) des profilierten Körpers einen ersten Block (13) und einen zweiten Block (14) aufweist, die von der Basis (9) in einer im Wesentlichen vertikalen Richtung vorstehen und die voneinander durch einen Schlitz (15) getrennt sind, wobei der erste Block (13) geeignet ist, mit einem unteren Ende der Platte (1) geometrisch verbunden zu werden, so dass eine erste Wand derselben in den Schlitz (15) gelangt und eine zweite Wand, die der ersten gegenüberliegt, auf der in Bezug auf den zweiten Block (14) gegenüberliegenden Seite auf der Basis (22) ruht.

7. Schrank für eine elektrische Schalttafel nach Anspruch 6, **dadurch gekennzeichnet, dass** der erste Block (13) aufweist:
- eine erste Wand (19), die den Schlitz (15) abgrenzt und eine ausgesparte Ecke (16) aufweist, die, von der Seite betrachtet, ein im Wesentlichen bogenförmiges Profil (17) aufweist, das geeignet ist, eine geometrische Verbindung mit einer dritten Wand der Platte (1) zu erleichtern;
- eine zweite Wand (21), die der ersten Wand (19) gegenüberliegt und sich im Wesentlichen vertikal von der Basis (9) erhebt, so dass darauf eine Kante (22) ausgebildet wird, auf der die Wand der Platte (1) ruhen kann; und
- eine dritte Wand (18), die die erste Wand (19) und die zweite Wand (21) miteinander verbindet und im Hinblick auf dieselben diagonal angeordnet ist, so dass auf der Basis (9) eine zusätzliche Trägerkante (20) für die Platte (1) ausgebildet wird.

8. Schrank für eine elektrische Schalttafel nach Anspruch 6, **dadurch gekennzeichnet, dass** der zweite Block (14), an einer Wand (23), die den Schlitz (15) abgrenzt, ein Durchgangsloch (24) aufweist, das geeignet ist, Mittel für eine Befestigung an der ersten Wand der Platte (1) unterzubringen.

9. Schrank für eine elektrische Schalttafel nach einem oder mehreren der vorhergehenden Ansprüche, **dadurch gekennzeichnet, dass** die haltende Führung (2), die eine Basiswand (4) aufweist, die mit den Verbindungsmitteln interagiert, und ein Paar von Seitenwänden (5), die sich von der Basiswand (4) erheben, im Wesentlichen parallel zueinander angeordnet sind und den profilierten Körper (7) führen.

10. Schrank für eine elektrische Schalttafel nach einem oder mehreren der vorhergehenden Ansprüche, **dadurch gekennzeichnet, dass** auf der Basis (9) des profilierten Körpers (7) und auf der in Bezug auf das Kopfteil (8) gegenüberliegenden Seite ein Hohlraum (26) vorhanden ist, der geeignet ist, Mittel zum Verbinden mit der Führung (2) unterzubringen, wobei die Verbindungsmittel einen selbstschneidenden Gewindestift (27) aufweisen, der mit einer Basis, die an der Basiswand (4) der Führung befestigt ist, und mit einem Kopf versehen ist, der in den Hohlraum (26) des profilierten Körpers (7) eingefügt ist.

## Revendications

1. Armoire pour tableau de commutation, comprenant :
- un châssis support conformé sensiblement en parallélépipède;
- au moins une plaque (1), pour monter des dispositifs électriques et/ou électroniques du tableau de commutation, ladite plaque (1) étant agencée sensiblement verticalement à l'intérieur du volume défini par le châssis;
- un dispositif, comprenant au moins un guide (2) pour supporter la plaque de montage (1) et un corps (7) profilé, muni d'une tête (8) convenant pour accoupler à une extrémité de la plaque (1) et avec une base (9), d'où des moyens d'accouplement fonctionnel au guide (2) font saillie dans le sens opposé à ladite tête (8), lesdits moyens d'accouplement convenant pour faciliter le coulissement de la plaque (1) le long du guide (2) et son agencement en une position de travail choisie;
**caractérisée en ce que** ledit au moins un guide (2) est fixé au châssis support, et **en ce que** lesdits moyens d'accouplement un élément fonctionnellement associé au corps (7) profilé et pouvant se déplacer par rapport à celui-ci.

2. Armoire pour tableau de commutation selon la revendication 1, **caractérisée en ce que** lesdits moyens d'accouplement fonctionnel au guide (2) comprennent une saillie (10) profilée, faisant saillie de la base (9) et ayant une surface d'extrémité ayant un profil convexe convenant pour interagir avec le guide (2), sa convexité étant dirigée dans la direction opposée par rapport à la tête (8).

3. Armoire pour tableau de commutation selon la revendication 1, **caractérisée en ce que** ledit élément déplaçable comprend un corps (12) sensiblement sphérique, faisant partiellement saillie d'un réceptacle (11) qui est fonctionnellement associé à la base (9) du corps (7) profilé, ledit corps (12) sphérique étant déplaçable par rapport au réceptacle (11) et convenant pour interagir fonctionnellement avec le guide (2).

4. Armoire pour tableau de commutation selon la revendication 3, **caractérisée en ce que** ledit réceptacle (11) comprend un corps sensiblement cylindrique, qui est inséré au moins partiellement, par serrage, dans un siège formé dans la base (9) du corps (7) profilé.

5. Armoire pour tableau de commutation selon la revendication 1, **caractérisée en ce que** ledit élément déplaçable comprend un galet sensiblement cylindrique, qui est fonctionnellement associé à la base (9) et pouvant se déplacer par rapport à elle.

6. Armoire pour tableau de commutation selon l'une ou plusieurs des revendications précédentes, **caractérisée en ce que** la tête (8) du corps profilé comprend un premier bloc (13) et un deuxième bloc (14), faisant saillies de la base (9) en une direction sensiblement verticale, et mutuellement séparés par une fente (15), ledit premier bloc (13) convenant pour être accouplé géométriquement à une extrémité inférieure de la plaque (1), de manière qu'une première paroi de celle-ci pénètre dans ladite fente (15), et une deuxième paroi, située à l'opposé de la première, repose sur la base (22), sur le côté opposé par rapport au deuxième bloc (14).

7. Armoire pour tableau de commutation selon la revendication 6, **caractérisée en ce que** ledit premier bloc (13) comprend :
- une première paroi (19), délimitant la fente (15) et ayant un angle (16) creusé qui, observé latéralement, a un profil (17) sensiblement courbé, convenant pour faciliter l'accouplement géométrique à une troisième paroi de la plaque (1);
- une deuxième paroi (21), située à l'opposé de la première paroi (19) et montant sensiblement verticalement de la base (9), pour former sur elle un bord (22) servant à faire reposer ladite paroi de la plaque (1); et
- une troisième paroi (18), reliant lesdites première (19) et deuxième (21) parois et située diagonalement par rapport à elles, de manière à former sur la base (9) un bord support (20) additionnel pour la plaque (1).

8. Armoire pour tableau de commutation selon la revendication 6, **caractérisée en ce que** ledit deuxième bloc (14) a, à une paroi qui délimite la fente (15), un trou traversant (24) convenant pour loger des moyens de fixation à la première paroi de la plaque (1).

9. Armoire pour tableau de commutation selon l'une ou plusieurs des revendications précédentes, **caractérisée en ce que** ledit guide support (2) comprend une paroi de base (4), interagissant avec les moyens d'accouplement, et une paire de parois latérales (5), qui montent de la paroi de base (4), sont sensiblement parallèles entre elles et guident ledit corps (7) profilé.

10. Armoire pour tableau de commutation selon l'une ou plusieurs des revendications précédentes, **caractérisée en ce que**, sur la base (9) du corps (7) profilé et sur le côté opposé par rapport à la tête (8) est prévue une cavité (26) convenant pour loger des moyens de connexion au guide (2), lesdits moyens de connexion comprenant une tige (27) autotaraudeuse, munie d'une base fixée à la paroi de base (4) du guide et d'une tête, qui est insérée dans ladite cavité (26) du corps (7) profilé.
